# EUROPÄISCHE PATENTSCHRIFT

(11) **EP 2 205 956 B1**
(45) Veröffentlichungstag und Bekanntmachung des Hinweises auf die Patenterteilung: **03.07.2013**
(21) Anmeldenummer: 08800464.3
(22) Anmeldetag: 08.10.2008
(51) Int. Cl.: G01L 19/08, B29C 45/77, B29C 45/78, G01D 21/02, G01K 1/14

(54) **MESSANORDNUNG IN EINER SPRITZGIESSANLAGE**
MEASURING ARRANGEMENT IN AN INJECTION-MOULDING SYSTEM
SYSTÈME DE MESURE POUR INSTALLATION DE MOULAGE PAR INJECTION

(30) Priorität: 22.10.2007 CH 16492007
(43) Veröffentlichungstag der Anmeldung: 14.07.2010
(73) Patentinhaber: Kistler Holding AG, 8408 Winterthur (CH)
(72) Erfinder: WASER, Max, CH-8335 Hittnau (CH); PLETSCHER, Ernst, CH-8460 Marthalen (CH)
(86) Internationale Anmeldenummer: PCT/CH2008/000418
(87) Internationale Veröffentlichungsnummer: WO 2009/052641

(56) Entgegenhaltungen:
- DE-A1- 3 939 728
- DE-A1- 19 806 121
- DE-B3-102004 043 443
- GAO R X ET AL: "Energy Extraction for a Self-Energized Pressure Sensor" IEEE SENSORS JOURNAL, IEEE SERVICE CENTER, NEW YORK, NY, US, Bd. 4, Nr. 1, 1. Februar 2004 (2004-02-01), Seiten 28-35, XP011105778 ISSN: 1530-437X
- MIZIER M-O: "MESURES SUR MACHINES TOURNANTES UNE SOLUTION: LA TELEMESURE" MESURES REGULATION AUTOMATISME, CFE. PARIS, FR, Bd. 53, Nr. 9, 20. Juni 1988 (1988-06-20), Seiten 41-42,44,46, XP000046254 ISSN: 0755-219X

## Beschreibung

### Technisches Gebiet

Die Erfindung betrifft eine Messanordnung zum Messen von einem oder mehreren Drücken und/oder Temperaturen in einer Spritzgiessanlage umfassend eine Grundplatte und mindestens einen Formeinsatz mit mindestens einem Teil einer Kavität, wobei die Grundplatte und der Formeinsatz an mindestens einer gemeinsamen Trennfläche lösbar aneinander anliegen, sowie mindestens einen Sensor im Formeinsatz zum Erfassen von Drücken und/oder Temperaturen, wobei die Messdaten von der Grundplatte aus an ein Auswertegerät übermitteln werden können. Die Messanordnung soll insbesondere Daten liefern zum Regeln eines Spritzgiessprozesses.

### Stand der Technik

Solche eingangs beschriebene Messanordnungen werden standardmässig in der Spritzgiesstechnologie angewandt. Probleme bilden hierbei die Leitungen der Sensoren, welche eine Verbindung vom Formeinsatz in die Grundplatte erfordern. Sobald diese beiden Komponenten voneinander getrennt werden, kann es vorkommen, dass die Leitungen dabei beschädigt oder sensorseitig ausgerissen werden, sodass die Sensoren ersetzt werden müssen. Reparaturen zur Behebung solcher Schäden sind sehr kostspielig.

Eine bekannte Lösung ist in der DE 10 2004 043 443 B3 beschrieben. Dort werden Kupplungsteile an der gemeinsamen Trennfläche verwendet, welche ineinander greifen, sobald die Grundplatte mit dem Formeinsatz zusammengefügt wird. Nachteilig an dieser Anordnung ist die Verschmutzungsgefahr und die damit verbundene umständliche Reinigung sowie die Gefahr der Beschädigung beider Kupplungsteile, die mindestens einseitig aus den Werkzeugkomponenten herausstehen, wenn diese geöffnet sind. Zudem ist eine sehr präzise Schliessung erforderlich, um die Kupplungsteile beim Zusammenfügen nicht zu beschädigen. Diese hier beschriebene Messanordnung lässt auch keine freie Wahl der Montagestelle der Kupplungsteile zu, da das Ineinandergreifen der Kupplungsteile stets in dieselbe Richtung erfolgen muss.

### Darstellung der Erfindung

Aufgabe der vorliegenden Erfindung ist es, eine Messanordnung eingangs erwähnter Art zu beschreiben, die eine Übertragung der Messdaten zum Auswertegerät sicherstellt und auch im zerlegten Zustand des Werkzeuges vor Verschmutzung und Beschädigung sicher ist.

Für viele Messanordnungen sind handelsübliche Bauteile für die Übertragung der Messdaten unbrauchbar weil sie viel zu gross und/oder zu teuer sind, beispielsweise bei kleinen Kavitäten von Spritzgiessanlagen.

Die Aufgabe wird gelöst durch die Merkmale des unabhängigen Patentanspruchs. Bevorzugte Ausführungen sind in den Unteransprüchen angegeben.

Die der Erfindung zugrunde liegende Idee besteht darin, dass beidseits an der gemeinsamen Trennfläche gegenüber voneinander ein Gebermodul und ein Nehmermodul zum Übermitteln von Messdaten angebracht sind, welche im wesentlichen Plan ausgestaltet und kraftlos trennbar sind.

Durch die Möglichkeit einer kraftlosen Trennung von Gebermodul und Nehmermodul ist gewährleistet, dass beim Öffnen keine Kräfte auf diese Module ausgeübt werden, insbesondere keine Querkräfte, welche eine schnelle Beschädigung dieser Module zur Folge haben. Zudem ist durch die Planheit der Module gewährleistet, dass diese Module nicht ineinander eingreifen, wodurch sie sich nicht gegenseitig beschädigen können. Ein weiterer Vorteil der Planheit besteht darin, dass plane Flächen leichter sauber zu halten sind und einfach gereinigt werden können. Da an den Modulen bei der Trennung niemals gezogen wird, wirkt auch keine Kraft auf deren Montageeinheiten und keinesfalls auf die daran angebrachten Kabel.

Ein weiterer Vorteil der erfindungsgemässen Messanordnung besteht darin, dass die Module an einer Fläche angebracht werden können, die in einer beliebigen Orientierung zur Trennungsrichtung der beiden Werkzeugkomponenten Grundplatte und Formeinsatz angeordnet sein können. Insbesondere kann die Trennfläche in der Bewegungsrichtung liegen. Die Vorrichtung nach dem genannten Stand der Technik hingegen muss an einer zur Bewegungsrichtung senkrecht angeordneten Fläche sein, was eine erhebliche Einschränkung ist.

### Kurze Beschreibung der Zeichnungen

Im Folgenden wird die Erfindung unter Beizug der Zeichnungen näher erklärt. Es zeigen
- Fig. 1: eine schematische Darstellung im Schnitt einer erfindungsgemässen Messanordnung;
- Fig. 2: eine schematische Darstellung im Schnitt von erfindungsgemässen Messanordnungen mit drei verschiedenen Anordnungen der Trennflächen;
- Fig. 3: eine schematische Darstellung im Schnitt einer erfindungsgemässen Messanordnungen im Bereich der Trennfläche bei Gebermodul und Nehmermodul, ausgestaltet als Punktkontaktierungen, in a) geschlossenem und b) offenem Zustand, sowie Detailansichten von drei verschiedenen Ausführungsformen davon, jeweils in geschlossenem Zustand in c), e) und g) und in offenem Zustand in d), f) und h);
- Fig. 4: eine schematische Darstellung eines Sensors mit Verlängerung, wobei a) die Verlängerung beidseitig mit einem festen Punktkontakt versehen ist und b) die Verlängerung mit dem Sensor integriert ist, und dieser am Ende der Verlängerung mit einem Punktkontakt versehen ist;
- Fig. 5: eine schematische Darstellung einer Erfindungsgemässen Messanordnung mit einem Sensor und Verlängerung mit Punktkontaktierung;
- Fig. 6: eine schematische Darstellung einer Erfindungsgemässen Messanordnung mit mehreren Sensoren;
- Fig. 7: eine schematische Darstellung von Gebermodul und Nehmermodul mit mehreren Punktkontakten;
- Fig. 8: eine schematische Darstellung einer Erfindungsgemässen Messanordnung mit einem Sensor hinter einem Auswerfstössel.

### Wege zur Ausführung der Erfindung

Die Bezugszeichen wurden in allen Zeichnungen beibehalten.

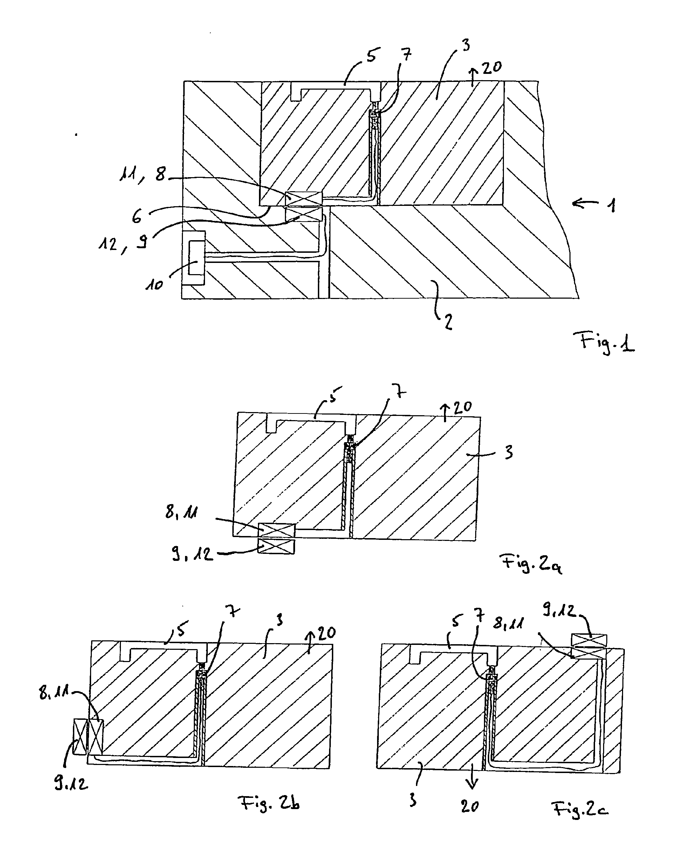

Die Fig. 1 zeigt einen Teilaufbau eines Teil einer Spritzgiessanlage 1 umfassend eine Grundplatte 2 und einen Formeinsatz mit mindestens einem Teil einer Kavität 5. Die Grundplatte 2 und der Formeinsatz 3 sind lösbar voneinander in einer Bewegungsrichtung 20 und verfügen über mindestens eine gemeinsame Trennfläche 6. Im Formeinsatz 3 ist ein Sensor 7 angebracht zum Erfassen von Messdaten, beispielsweise von Drücken und/oder Temperaturen in der Kavität 5. Insbesondere kann der Sensor 7 ein piezoelektrischer Drucksensor oder ein Thermoelement sein. Mit diesem Sensor 7 elektrisch verbunden ist ein Gebermodul 8 im Formeinsatz 3 an der Trennfläche 6. In der Grundplatte 2, ebenfalls an der Trennfläche 6, gegenüber vom Gebermodul 8 ist ein Nehmermodul 9 angebracht, wobei das Gebermodul 8 vom Sensor 7 aufgenommene Messdaten an das Nehmermodul 9 übertragen kann. Das Nehmermodul 9 ist elektrisch verbunden mit einem Stecker 10, am dem ein Auswertegerät (nicht dargestellt) zum Auswerten der Messdaten angeschlossen sein kann.

Die Spritzgiessanlage 1 kann insbesondere über mehrere Grundplatten 1 und bei Bedarf auch über mehrere Formeinsätze 3 mit gemeinsamen Trennflächen 6 mit jeweils gegenüberliegenden Gebermodulen 8 und Nehmermodulen 9 verfügen.

Gebermodul 8 und Nehmermodul 9 sind erfindungsgemäss im wesentlichen Plan ausgestaltet, greifen nicht ineinander ein und sind nicht aneinander befestigt. Sie sind höchstens berührend nebeneinander angebracht. Somit sind sie kraftlos von einander trennbar. Insbesondere sind sie auch tangential entlang der Trennfläche 6 verschiebbar. Dank dieser kraftlosen Trennung entsteht kein Verschleiss beim Öffnen und Schliessen der Komponenten 2, 3 der Spritzgiessanlage 1 an der Trennfläche 6. Dies erlaubt insbesondere eine freie Wahl des Einbauortes der Module 8, 9 an einer beliebigen Trennfläche 6. Die Messsignale können jeweils von einem Formeinsatz 3 auf eine Grundplatte 2 übertragen werden.

Wie in der Fig. 2a dargestellt können Gebermodul 8 und Nehmermodul 9 an einer Trennfläche 6 sein, welche senkrecht zur Bewegungsrichtung 20 angeordnet ist, welche den Formeinsatz 3 von der Grundplatte 2 trennt. Alternativ dazu können diese Module 8, 9 auch parallel zur Bewegungsrichtung 20 sein, wie in Fig. 2b dargestellt. Zudem kann die Trennfläche 6 auch auf der Fläche sein, auf welcher die Kavität 5 ausgestaltet ist, wie in Fig. 2c dargestellt. In dieser Anordnung werden die Module 8, 9 an der Trennfläche 6 bei jeder Entformung voneinander entfernt und anschliessend wieder zueinander gebracht.

Insbesondere können Gebermodul und Nehmermodul 9 als Sendemodul 11 und Empfangsmodul 12 ausgestaltet sein, wodurch die Messdaten drahtlos übertragen werden können, beispielsweise durch Nahfeldtelemetrie. Das Sendemodul 11 kann dazu drahtlos vom Empfangsmodul 12 gespiesen werden oder mit einer Batterie versorgt sein. Insbesondere können Sendemodul 11 und Empfangsmodul 12 hermetisch dicht verschlossen sein. Dies erleichtert die Reinigung und schützt vor Eindringen von Verunreinigungen.

Im Gegensatz zu rotierenden Systemen, beispielsweise Räder, bei denen Messdaten von einem Gebermodul auf einem beweglichen Teil mittels Telemetrie zu einem gegenüber liegenden Nehmermodul in einem fest stehenden Teil übertragen werden, findet in der Messanordnung der vorliegenden Erfindung während einer Messung keine relative Bewegung zwischen Gebermodul 8 und Nehmermodul 9 statt. Grundplatte und Formeinsatz liegen während einer Messung stets ruhig aneinander. Daher können für Gebermodul und Nehmermodul günstigere Komponenten verwendet werden.

Vorzugsweise kann das Sendemodul 11 einen nicht flüchtigen Speicher umfassen zum Speichern von Konfigurationsdaten.

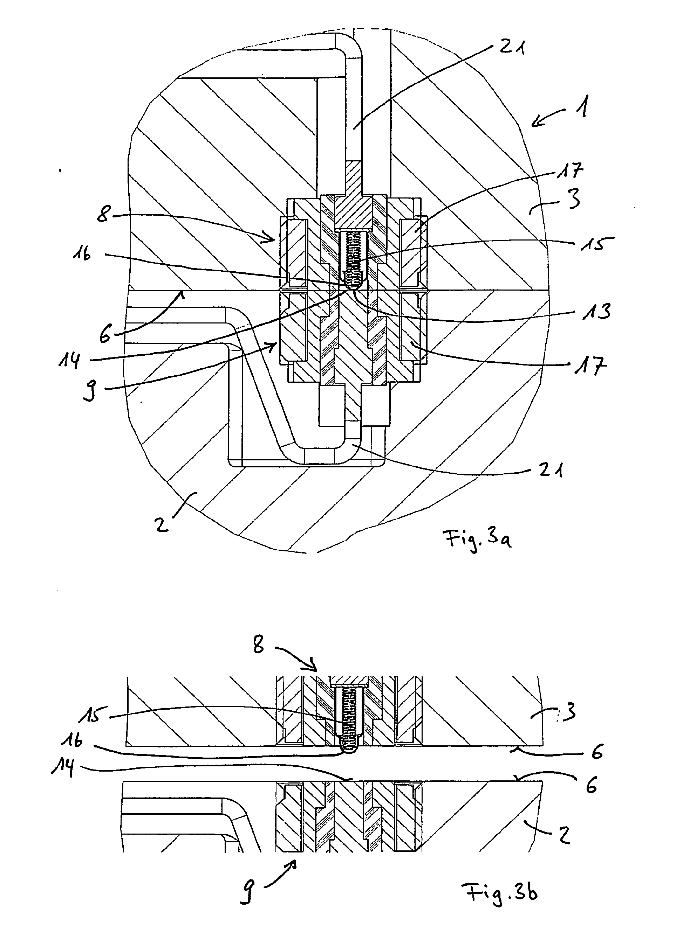

In einer alternativen Ausgestaltung können die Messdaten über Punktkontakte 13 vom Gebermodul 8 zum Nehmermodul 9 übertragen werden, eines dieser Module 8, 9 jeweils mit einem festem Kontakt 14 und das andere mit einem Federkontakt 16 ausgestaltet sind. Fig. 3a zeigt eine mögliche Ausgestaltung von Gebermodul 8 und Nehmermodul 9, ausgestaltet mit festem Kontakt 14 und mit Federkontakt 16, in geschlossenen Zustand (3a) und den mittleren Ausschnitt im an der Trennfläche 6 geöffneten Zustand (3b). Dabei ist zu beachten, dass die Kontakte 14 und 16 austauschbar in Gebermodul 8 und Nehmermodul 9 eingesetzt werden können.

Gebermodul 8 und Nehmermodul 9 sind, abgesehen vom jeweils im Zentrum gelegenen festem Kontakt 14 resp. Federkontakt 16, im Wesentlichen gleich ausgestaltet. Sie können mit einem Gewindering 17 an den Komponenten 2, 3 befestigt werden. Eine Leitung 21 zum Übertragen der Messdaten kann jeweils aus den Modulen 8, 9 herausführen. Diese kann zu einem Sensor 7, zu einem Stecker 10 oder zu einem weiteren Modul 8, 9 führen.

Der feste Kontakt 14 weist keine beweglichen Teile auf, der Federkontakt 16 hingegen umfasst eine Feder 15. Vorzugsweise ist dieser feste Kontakt 14 im Nehmermodul 9 ausgestaltet.

Der feste Kontakt 14 liegt mit seiner Stirnfläche auf der Trennfläche 6, und ist mit einer festen metallischen Oberfläche ausgestattet, welche mit der am Modul angebrachten Leitung 21 elektrisch verbunden ist. Diese metallische Oberfläche ist isoliert angebracht und steht somit nicht in elektrischem Kontakt mit der Komponente 2 oder 3, in der das Modul 8 oder 9 eingebaut ist.

Der Federkontakt 16 ist vorzugsweise im Gebermodul 8 ausgestaltet. Dieser bewegliche Kontakt ist im Wesentlichen gleich aufgebaut wie der feste Kontakt, wobei aber an Stelle der festen metallischen Oberfläche eine bewegliche Oberfläche angebracht ist. Die Feder 15 bewirkt auf diese bewegliche Oberfläche eine Federkraft senkrecht zur Trennfläche 6 in Richtung des festen Kontaktes 14. Durch diese Kraft ist ein Punktkontakt 13 zu dieser an der Trennfläche 6 gegenüber liegenden festen metallischen Oberfläche des festen Kontaktes 14 stets gewährleistet. In Fig. 3b des offenen Zustandes ist erkennbar, dass der Federkontakt 16 aus der Trennfläche 6 durch die Federkraft herausragt, wenn der feste Kontakt 14 beabstandet ist. In dieser Anordnung ist die Messkette unterbrochen, es können so keine Daten übertragen werden. In der erfindungsgemässen Messanordnung liegen beide Komponenten 2, 3 aneinander, wodurch der Federkontakt 16 nicht mehr aus der Trennfläche 6 herausragt.

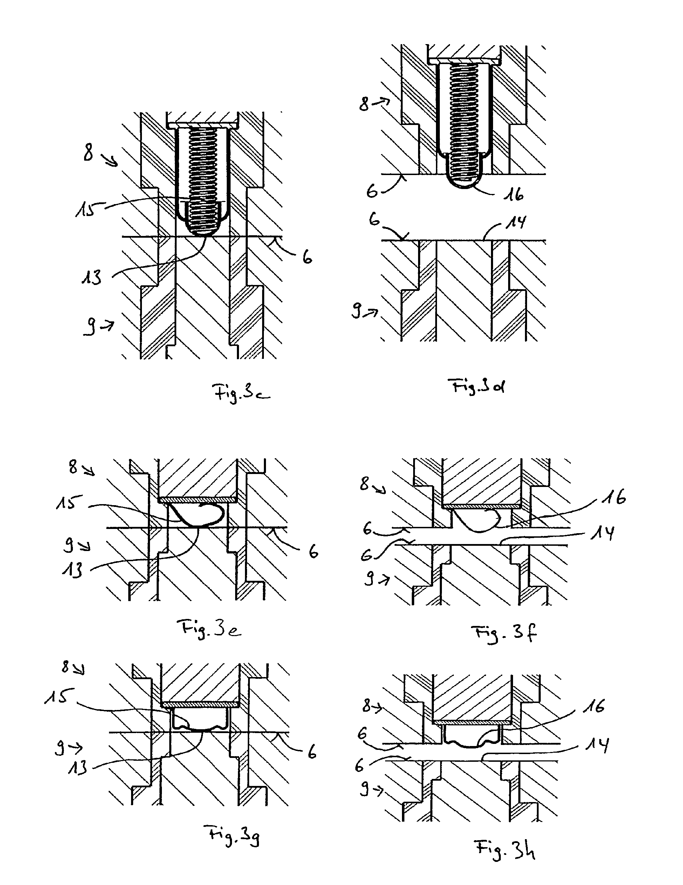

In den Fig. 3c und 3d sind die Bereiche des festen Kontaktes 14 und des Federkontaktes 16 nochmals abgebildet.

Fig. 3e und 3f sowie 3g und 3h sind alternative Anordnungen angegeben, bei denen die Feder 15 jeweils direkt den Federkontakt 16 bildet. Fig. 3e und 3g bilden geschlossene Zustände ab, Fig. 3g und 3h die entsprechenden geöffneten Zustände. In den geöffneten Zustände sind die Federwirkungen zu erkennen, welche den Federkontakt 16 aus der Trennfläche 6 hervorragen lässt. Diese Federn haben den Vorteil, dass sie in Anwendungen gemäss Fig. 2b geeignet sind, bei der die Bewegungsrichtung 20 parallel zur Trennfläche 6 ist.

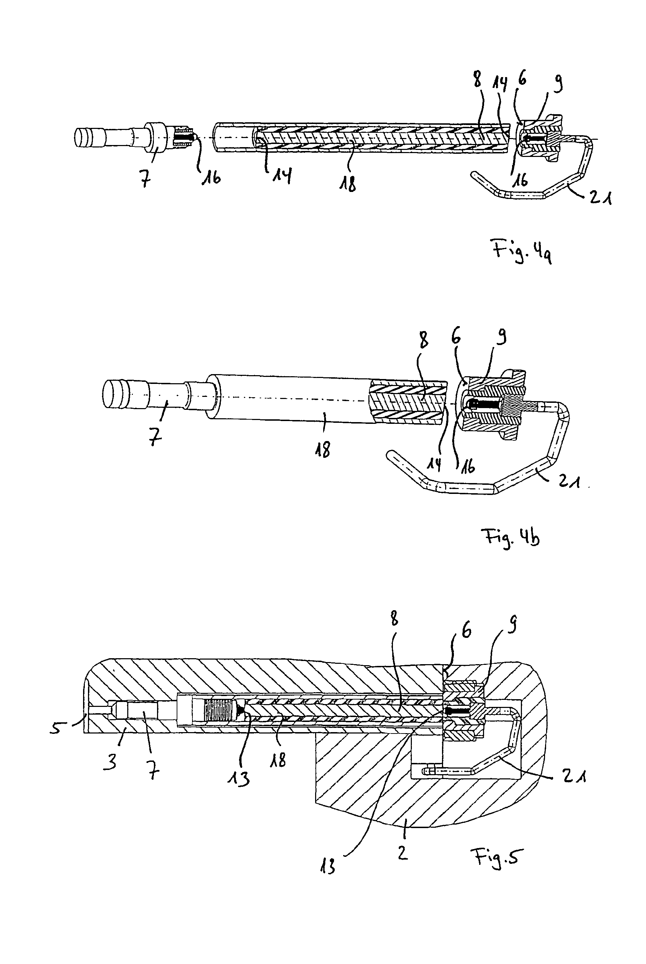

In einem weiteren Ausführungsbeispiel ist, wie in Fig. 4a dargestellt, der Sensor 7 selbst mit einem Federkontakt 16 ausgestattet. Dieser Federkontakt 16 kann nun direkt als Gebermodul 8 wirken. Um eine Distanz zu überbrücken, kann der Sensor 7 mit einer Verlängerungsverbindung 18 der gewünschten Länge mit mindestens einem entsprechenden festen Kontakt 14 verlängert werden. Diese Verlängerungsverbindung 18 kann an seinem anderen Ende als ein beschriebenes Gebermodul 8 entweder mit festem Kontakt 14 oder mit Federkontakt 16 ausgebildet werden. Dies vereinfacht die Montage des Sensors, der in dieser Anordnung lediglich in eine dafür vorgesehene Bohrung gebracht werden muss und rückseitig, durch die Montage der Verlängerungsverbindung 18, in seiner Position fest sitzt. Das Gebermodul 8 ist in der Anordnung nach Fig. 4a und b der verlängerte Sensor 7.

Alternativ dazu kann, wie in Fig. 4b dargestellt, der Sensor 7 auch mit der Verlängerungsverbindung 18 zu einem Stück integriert sein, was die Montage wiederum vereinfacht. Auf Wunsch kann die Länge der Verlängerungsverbindung 18 auf das erforderliche Mass vom Anwender beim Einbau gekürzt werden, da die Stirnfläche des festen Kontaktes 14 komplett flach ausgestaltet ist. Dies vereinfacht die Planung bei der Werkzeugentwicklung.

In der Fig. 5 ist ein Sensor nach Fig. 4a im eingebauten Zustand dargestellt.

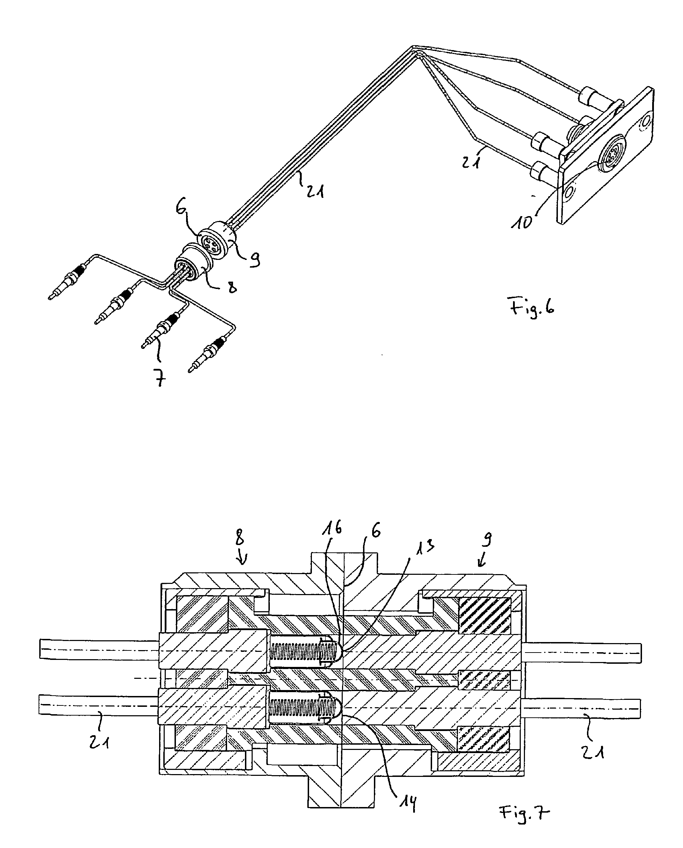

Eine weitere erfindungsgemässe Messanordnung ist in Fig. 6 dargestellt. In dieser Anordnung verfügen Gebermodul 8 und Nehmermodul 9 jeweils über mehrere Punktkontakte 13, wodurch die Messsignale von mehreren Sensoren 7 über ein und dasselbe Gebermodul 8 zu ein und demselben Nehmermodul 9 übertragen werden können. Entsprechend laufen vom Nehmermodul 9 mehrere Leitungen 21 zu einem Stecker 10.

Fig. 7 zeigt ein Gebermodul 8 und ein Nehmermodul 9 mit mehreren darin angeordneten Punktkontakten 13. Natürlich können auch mehrere Sendemodule 11 und mehrere Empfängermodule 12 an dieser Stelle angeordnet sein zum simultanen Übertragen von Messdaten von verschiedenen Sensoren oder Fühlern.

Das Gebermodul 8 kann auch an einem Formeinsatz 3 angeordnet sein, welche sich gegenüber der Grundplatte 2 bewegt, insbesondere periodisch bewegt oder schwenkt. Die Messanordnung ist zum Übertragen der Messdaten bereit, sobald Gebermodul 8 und Nehmermodul 9 gegenüberliegen. Insbesondere ist es nicht erforderlich, dass die Positionen von Gebermodul 8 und Nehmermodul 9 exakt gegenüber liegen. Beide Möglichkeiten der Datenübertragung, mittels Telemetrie und mittels Punktkontakt, lassen einen gewissen seitlichen Versatz zu, ohne die Datenübertragung dadurch zu gefährden und ohne dabei eine Komponente zu beschädigen.

Bei Rundtaktmaschinen, bei denen beispielsweise alle 60° oder 90° eine Operation ausgeführt wird, können verschiedene Operationssegmente mit Sensoren und somit mit Gebermodulen 8 versehen werden, die dann abwechslungsweise an dasselbe Nehmermodul 9 anliegen. Dies geschieht beispielsweise durch periodische Bewegungen oder Schwenkungen zwischen Formeinsatz 3 und Grundplatte 2. Sobald ein Gebermodul 8 gegenüber einem Nehmermodul 9 zu liegen kommt, kann mit der Messung und der Datenübertragung begonnen werden. Ein Beispiel eines Vier-Stufenprozesses wäre (1) Komponenten einlegen, (2) blau spritzen, (3) grün spritzen und (2) auswerfen eines zweifarbigen Teiles, beispielsweise einer Zahnbürste. In den Stufen (2) und (3) würde dann für die Prozessregelung der Druck gemessen und übertragen werden.

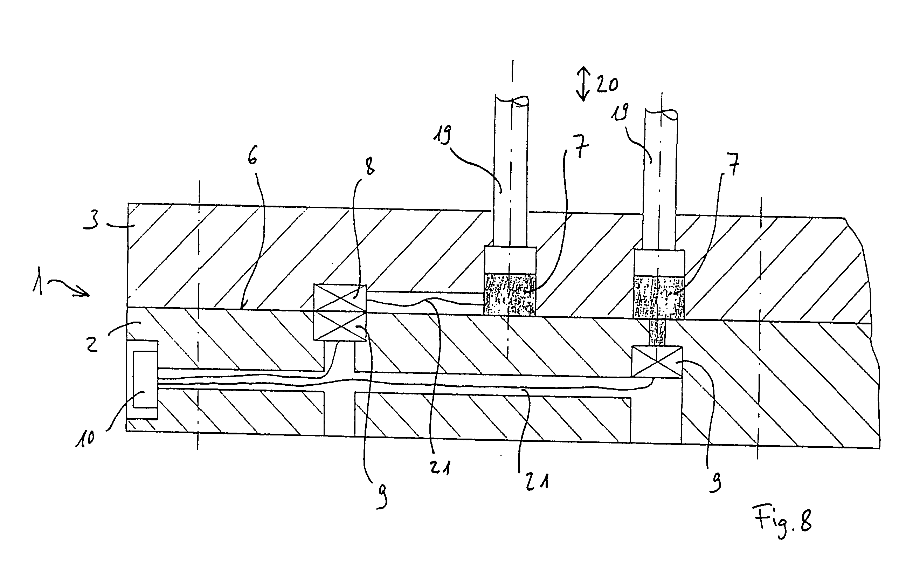

In Fig. 8 ist ein Teil eines Auswerfmechanismus dargestellt. Gebermodul 8 und Nehmermodul 9 können auch, wie in Fig. 8 ersichtlich, an einem Auswerfmechanismus einer Spritzgiessanlage angebracht sein, welcher für den Auswurf der fertigen Teile verantwortlich ist. Insbesondere kann der Sensor 7 hinter einem Auswerfstössel 19 angebracht sein.

Zu bemerken ist, dass die Messanordnung für viele Anwendungen jeweils nur eine Messleitung aufweist, welche gegenüber der Spritzgiessanlage 1 hochisolierend angebracht ist. Die Masseleitung kann direkt über das Werkzeug erfolgen. Dies vereinfacht die Messanordnung enorm, was wiederum zu geringeren Kosten führt. Sollten, beispielsweise für Temperaturmessungen, doch zwei Leitungen benötigt werden, so können Gebermodul 8 und Nehmermodul 9 auch mehrere Leitungen miteinander verbinden oder durch Telemetrie mehrere Daten simultan übertragen.

**Bezugszeichenliste**

| | |
|---|---|
| 1 | Spritzgiessanlage |
| 2 | Grundplatte |
| 3 | Formeinsatz |
| 5 | Kavität |
| 6 | Trennfläche |
| 7 | Sensor |
| 8 | Gebermodul |
| 9 | Nehmermodul |
| 10 | Stecker |
| 11 | Sendemodul |
| 12 | Empfängermodul |
| 13 | Punktkontakt |
| 14 | Fester Kontakt |
| 15 | Feder |
| 16 | Federkontakt |
| 17 | Gewindering |
| 18 | Verlängerungsverbindung |
| 19 | Auswerfstössel |
| 20 | Bewegungsrichtung |
| 21 | Leitung |

## Patentansprüche

1. Messanordnung zum Messen von einem oder mehreren Drücken und/oder Temperaturen in einer Spritzgiessanlage, umfassend eine Grundplatte (2) und mindestens einen Formeinsatz (3) mit mindestens einem Teil einer Kavität (5), wobei die Grundplatte (2) und der Formeinsatz (3) an mindestens einer gemeinsamen Trennfläche (6) lösbar aneinander anliegen, sowie mindestens einen Sensor (7) im Formeinsatz (3) zum Erfassen von Drücken und/oder Temperaturen, sowie ein Gebermodul (8) im Formeinsatz (3) an der Trennfläche (6), das mit dem Sensor (7) elektrisch verbunden ist, sowie ein Nehmermodul (9) in der Grundplatte (2) an der Trennfläche (6), gegenüber des Gebermoduls (8), wobei Messdaten vom Gebermodul (8) zum Nehmermodul (9) übertragen und an ein mit dem Nehmermodul (8) elektrisch verbundenes Auswertegerät übermitteln werden können, **dadurch gekennzeichnet, dass** Gebermodul (8) und Nehmermodul (9) an der Trennfläche (6) im wesentlichen plan ausgestaltet und kraftlos trennbar sind.

2. Messanordnung nach Anspruch 1, **dadurch gekennzeichnet, dass** Gebermodul (8) und Nehmermodul (9) mittels mindestens je einem Punktkontakt (13) Messdaten übertragen können.

3. Messanordnung nach Anspruch 2, **dadurch gekennzeichnet, dass** der Punktkontakt (13) auf der einen Seite ein Federkontakt (16) ist, der mittels einer Feder (15) auf den anderen Punktkontakt eine Kraft senkrecht zur Trennfläche (6) ausübt, und auf der anderen Seite ein fester Kontakt (14) ist ohne bewegliche Teile.

4. Messanordnung nach einem der Ansprüche 2 oder 3, **dadurch gekennzeichnet, dass** der Sensor (7) mit einem Punktkontakt (13) ausgerüstet ist, welcher direkt oder mittels einer starren Verlängerungsverbindung (18) mit dem Gebermodul (8) in elektrischem Kontakt steht.

5. Messanordnung nach Anspruch 1, **dadurch gekennzeichnet, dass** das Gebermodul (8) ein Sendemodul (11) und das Nehmermodul (9) ein Empfängermodul (12) ist zum drahtlosen Übertragen der Messdaten, insbesondere mittels Nahfeldtelemetrie.

6. Messanordnung nach einem der Ansprüche 5, **dadurch gekennzeichnet, dass** das Sendemodul (11) eine Batterie umfasst oder drahtlos vom Empfängermodul (12) gespiesen werden kann.

7. Messanordnung nach einem der Ansprüche 5 bis 6, **dadurch gekennzeichnet, dass** Sendemodul (11) und Empfängermodul (12) hermetisch dicht verschlossen sind.

8. Messanordnung nach einem der Ansprüche 5 bis 7, **dadurch gekennzeichnet, dass** das Sendemodul (11) einen nicht flüchtigen Speicher umfasst zum Speichern von Konfigurationsdaten.

9. Messanordnung nach einem der vorhergehenden Ansprüche, **dadurch gekennzeichnet, dass** der Sensor (7) ein piezoelektrischer Werkzeuginnendrucksensor oder ein Thermoelement ist.

10. Messanordnung nach einem der vorhergehenden Ansprüche, **dadurch gekennzeichnet, dass** das Gebermodul (8) mit mehreren Sensoren (7) elektrisch verbunden ist und dem Nehmermodul (9) Signale von mehreren Sensoren (7) simultan übertragen kann.

11. Messanordnung nach einem der vorhergehenden Ansprüche, **dadurch gekennzeichnet, dass** die Messanordnung mehrere Gebermodule (8) umfasst, welche jeweils mit mindestens einem Sensor (7) verbunden sind.

12. Messanordnung nach Anspruch 11, **dadurch gekennzeichnet, dass** zwei oder mehr Gebermodule (8) jeweils demselben Nehmermodul (9) zugeordnet sind, wobei zum Erfassen und Übertragen von Messdaten die Grundplatte (2) gegenüber dem Formeinsatz (3) derart verschiebbar ist, dass die Gebermodule (8) abwechselnd gegenüber dem Nehmermodul (9) liegen.

13. Messanordnung nach einem der vorhergehenden Ansprüche, **dadurch gekennzeichnet, dass** der Sensor (7), das Gebermodul (8) und das Nehmermodul (9) in einem Auswerfmechanismus (19) angeordnet sind, das dem Auswurf fertiger Formteile aus der Spritzgiessanlage dient.

14. Messanordnung nach einem der vorhergehenden Ansprüche, **dadurch gekennzeichnet, dass** die Trennfläche (6) senkrecht zur Bewegungsrichtung (20) angeordnet ist, welche den Formeinsatz (3) von der Grundplatte (2) trennt.

15. Messanordnung nach einem der vorhergehenden Ansprüche, **dadurch gekennzeichnet, dass** die Trennfläche (6) parallel zur Bewegungsrichtung (20) angeordnet ist, welche den Formeinsatz (3) von der Grundplatte (2) trennt.

## Claims

1. A measuring arrangement for measuring one or more pressures and/or temperatures in an injection-molding system said arrangement comprising a base plate (2) and at least one mold insert (3) with at least part of a cavity (5) wherein the base plate (2) and the mold insert (3) rest against one another in a releasable manner on at least one common separation surface (6), as well as at least one sensor (7) within the mold insert (3) for the detection of pressures and/or temperatures, and a transmitter module (8) in the mold insert (3) on the separation surface (6) electrically connected to the sensor (7), and a receiving module (9) in the base plate (2) on the separation surface (6) opposite the transmitter module (8) wherein measurement data can be transmitted from the transmitter module (8) to the receiving module (9) and to an evaluation device electrically connected to the receiving module (9) **characterized in that** the transmitter module (8) and the receiving module (9) on the separation surface (6) are essentially formed in a planar manner and can be separated without force.

2. A measuring arrangement according to claim 1 **characterized in that** the transmitter module (8) and the receiving module (9) can transmit measurement data by means of at least one point contact (13) each.

3. A measuring arrangement according to claim 2 **characterized in that** the point contact (13) on one side is a spring contact (16) applying, by means of a spring (15), a force onto the other point contact perpendicularly to the separation surface (6), and that on the other side it is a fixed contact (14) without movable parts.

4. A measuring arrangement according to any of the claims 2 or 3 **characterized in that** the sensor (7) is provided with a point contact (13) that is in electrical contact with the transmitter module (8) directly or by means of a rigid electrical extension connection (18).

5. A measuring arrangement according to claim 1 **characterized in that** the transmitter module (8) is an emitting module (11) and the receiving module (9) is a sensing module (12) for wireless transmission of the measurement data.

6. A measuring arrangement according to any of the claims 5 **characterized in that** the emitting module (11) comprises a battery or is electrically supplied by the sensing module (12) in a wireless manner.

7. A measuring arrangement according to any of the claims 5 to 6 **characterized in that** the emitting module (11) and the sensing module (12) are hermetically sealed.

8. A measuring arrangement according to any of the claims 5 to 7 **characterized in that** the emitting module (11) comprises a non-volatile memory for storing configuration data.

9. A measuring arrangement according to any of the preceding claims **characterized in that** the sensor (7) is a piezoelectric tool inner pressure sensor or a thermocouple.

10. A measuring arrangement according to any of the preceding claims **characterized in that** the transmitter module (8) is electrically connected to several sensors (7) and can transmit signals of several sensors (7) simultaneously to the receiving module (9).

11. A measuring arrangement according to any of the preceding claims **characterized in that** said measuring arrangement comprises several transmitter modules (8) each of which is electrically connected to at least one sensor (7).

12. A measuring arrangement according to claim 11 **characterized in that** two or more transmitter modules (8) each are assigned to the same receiving module (9) wherein for detecting and transmitting measurement data the base plate (2) is movable with respect to the mold insert (3) in such a way that the transmitter modules (8) alternately one after the other lie opposite the receiving module.

13. A measuring arrangement according to any of the preceding claims **characterized in that** the sensor (7), the transmitter module (8) and the receiving module (9) are positioned in an ejection mechanism (19) serving to eject finished formed parts from the injection molding system.

14. A measuring arrangement according to any of the preceding claims **characterized in that** the separation surface (6) is arranged perpendicularly to the direction of movement (20) separating the mold insert (3) from the base plate (2).

15. A measuring arrangement according to any of the preceding claims **characterized in that** the separation surface (6) is arranged in parallel to the direction of movement (20) separating the mold insert (3) from the base plate (2).

## Revendications

1. Un dispositif de mesure pour la mesure d'une ou plusieurs pressions et/ou températures dans un système de moulage par injection comprenant une plaque de base (2) et au moins un insert de moule (3) avec au moins une partie d'une cavité (5) dans lequel la plaque de base (2) et l'insert de moule (3) s'épaulent l'un contre l'autre de manière amovible sur au moins une surface de séparation (6) commune, ainsi qu'au moins un capteur (7) au sein de l'insert de moule (3) pour la détection de pressions et/ou températures, et un module transmetteur (8) dans l'insert de moule (3) à la surface de séparation (6) relié électriquement au capteur (7), et un module récepteur (9) dans la plaque de base (2) à la surface de séparation (6) à l'opposé du module transmetteur (8) dans lequel données de mesure peuvent être transmis du module transmetteur (8) au module récepteur (9) et à un dispositif d'évaluation électriquement relié au module récepteur (9) **caractérisé en ce que** le module transmetteur (8) et le module récepteur (9) sont, à la surface de séparation (6), de forme essentiellement planaire et peuvent être séparés sans force.

2. Un dispositif de mesure selon la revendication 1 **caractérisé en ce que** le module transmetteur (8) et le module récepteur (9) peuvent transmettre données de mesure au moyen d'au moins un contact ponctuel (13) chacun.

3. Un dispositif de mesure selon la revendication 2 **caractérisé en ce que** le contact ponctuel (13) d'un côté est un contact à ressort (16) appliquant, à l'aide d'un ressort (15), une force sur l'autre contact ponctuel perpendiculairement à la surface de séparation (6), et **en ce qu'**il est un contact fixe (14) sans pièces mobiles.

4. Un dispositif de mesure selon une des revendications 2 ou 3 **caractérisé en ce que** le capteur (7) est prévu avec un contact ponctuel (13) qui est en contact électrique avec le module transmetteur (8) directement ou par l'intermédiaire d'une rallonge électrique (18) rigide.

5. Un dispositif de mesure selon la revendication 1 **caractérisé en ce que** le module transmetteur (8) est un module d'émission (11) et le module récepteur (9) est un module de détection (12) pour la transmission sans fil des données de mesure.

6. Un dispositif de mesure selon une des revendications 5 **caractérisé en ce que** le module d'émission (11) comprend une pile ou est alimenté électriquement par le module de détection (12) d'une manière sans fil.

7. Un dispositif de mesure selon une des revendications 5 à 6 **caractérisé en ce que** le module d'émission (11) et le module de détection (12) sont hermétiquement fermés.

8. Un dispositif de mesure selon une des revendications 5 à 7 **caractérisé en ce que** le module d'émission (11) comprend une mémoire non volatile pour enregistrer des données de configuration.

9. Un dispositif de mesure selon l'une des revendications précédentes **caractérisé en ce que** le capteur (7) est un capteur piézoélectrique de la pression intérieure du moule ou un thermocouple.

10. Un dispositif de mesure selon l'une des revendications précédentes **caractérisé en ce que** le module transmetteur (8) est relié électriquement à plusieurs capteurs (7) et apte à transmettre des signaux de plusieurs capteurs (7) simultanément au module récepteur (9).

11. Un dispositif de mesure selon l'une des revendications précédentes **caractérisé en ce que** ledit dispositif de mesure comprend plusieurs modules transmetteurs (8), chacun d'eux étant relié électriquement à au moins un capteur (7).

12. Un dispositif de mesure selon la revendication 11 **caractérisé en ce que** deux ou plusieurs modules transmetteurs (8) sont chacun assigné au même module récepteur (9) dans lequel pour la détection et la transmission des données de mesure la plaque de base (2) est mobile par rapport à l'insert de moule (3) d'une telle manière que les modules transmetteurs (8) sont alternativement positionnés pour faire face au module récepteur.

13. Un dispositif de mesure selon l'une des revendications précédentes **caractérisé en ce que** le capteur (7), le module transmetteur (8) et le module récepteur (9) sont positionnés dans un mécanisme d'éjection (19) servant à l'éjection des pièces formées finies du système de moulage par injection.

14. Un dispositif de mesure selon l'une des revendications précédentes **caractérisé en ce que** la surface de séparation (6) est disposée perpendiculairement au sens de mouvement (20) séparant l'insert de moule (3) de la plaque de base (2).

15. Un dispositif de mesure selon l'une des revendications précédentes **caractérisé en ce que** la surface de séparation (6) est disposée en parallèle au sens de mouvement (20) séparant l'insert de moule (3) de la plaque de base (2).
